# EUROPÄISCHE PATENTSCHRIFT

(11) **EP 1 507 451 B1**
(45) Veröffentlichungstag und Bekanntmachung des Hinweises auf die Patenterteilung: **13.09.2006**
(21) Anmeldenummer: 03735477.6
(22) Anmeldetag: 27.05.2003
(51) Int. Cl.: A01D 34/83

(54) **VORRICHTUNG ZUM MÄHEN VON PFLANZEN**
DEVICE FOR MOWING PLANTS
DISPOSITIF POUR MOISSONNER DES PLANTES

(30) Priorität: 27.05.2002 DE 10224151
(43) Veröffentlichungstag der Anmeldung: 23.02.2005
(73) Patentinhaber: Maschinenfabrik Bernard Krone GmbH, 48480 Spelle (DE)
(72) Erfinder: EHLERT, Detlef, 14476 Satzkorn (DE); KRAATZ, Siegwart, 14480 Potsdam (DE)
(74) Vertreter: Pott, Ulrich
(86) Internationale Anmeldenummer: PCT/EP2003/005588
(87) Internationale Veröffentlichungsnummer: WO 2003/098994

(56) Entgegenhaltungen:
- DE-A- 1 657 043
- DE-A- 2 929 184
- DE-A- 3 623 563
- DE-C- 904 121
- DE-C- 920 458
- FR-A- 2 309 126
- US-A- 2 079 945
- US-A- 2 728 181
- US-A- 2 782 582

## Beschreibung

Die Erfindung bezieht sich auf eine Vorrichtung zum Mähen von Pflanzen durch ein umlaufendes endloses Schneidband mit Zähnen, wobei zur Führung des Schneidbandes ein Rahmen, Umlenkräder sowie eine untere Führungsschiene angeordnet sind und der im Eingriff befindliche Bereich des Schneidbandes zur Fixierung an der unteren Führungsschiene mit Führungsklammern zusammenwirkt. Eine derartige Vorrichtung ist beispielsweise anwendbar in der Landwirtschaft zum Mähen von Halmfutter und von Getreidekulturen.

Zum Mähen von Futterpflanzen und Getreidekulturen auf landwirtschaftlich genutzten Flächen werden Fingerbalkenmähwerke und Doppelmessermähwerke verwendet, deren Messerklingen eine oszillierende Bewegung ausführen. Fingerbalkenmähwerke besitzen sinusförmig bewegte Messerbalken, deren Klingen mit einer Gegenschneide drücken und nach dem Prinzip des Scherenschnittes abtrennen.

Bei Doppelmessermähwerken bildet ein gegenläufig bewegter zweiter Messerbalken die erforderliche Gegenschneide. Infolge der sinusförmigen Bewegungen arbeiten diese Mähwerke nicht mit konstanter Schnittgeschwindigkeit, sondern in einem Geschwindigkeitsspektrum von Null bis zu einer begrenzten Maximalgeschwindigkeit. Diese ist infolge der auftretenden hohen Massenkräfte auf wenige Meter je Sekunde beschränkt.

Grundsätzlich ist einzuschätzen, daß oszillierende Mähwerke nur begrenzte Fahrgeschwindigkeiten und Flächenleistungen ermöglichen. Insbesondere neigen Fingerbalkenmähwerke zu Verstopfungen bei üppigen und krautigen Pflanzenbeständen sowie bei auftretendem Messerverschleiß zu unbefriedigenden Schnitteigenschaf ten.

Aus der US-A-2,728,181 ist eine Vorrichtung der eingangs genannten Art bekannt, bei der der im Eingriff befindliche Bereich des Schneidbandes zur Fixierung an der unteren Schiene mit Führungsklammern zusammenwirkt, die diesen Bereich fest fixieren. Das kann jedoch dazu führen, daß zwischen Führungsschiene und Schneidband gelangendes Pflanzenmaterial zu Betriebsbeeinträchtigungen z.B. in Gestalt von Verklemmungen führt.

Es ist Aufgabe der vorliegenden Erfindung, eine Vorrichtung zu schaffen, mit welcher der Schnittvorgang für eine große Arbeitsbreite mit einem hohen energetischen Wirkungsgrad zu realisieren ist, die nur sehr geringe Herstellungskosten erfordert und bei der darüber hinaus die Gefahr von Betriebsbeeinträchtigungen aufgrund von Verklemmungen zu vermeiden ist. An den Schneidbändern auftretende Schäden und Verschleißerscheinungen sollen minimiert werden. Gleichzeitig ist abzusichern, daß die Maschine mit nur geringen Umrüstaufwendungen je nach Einsatzbedingung sowohl nach dem Prinzip des freien Schnittes als auch mit Gegenhaltern arbeiten kann und daß bei Bedarf ein Aufbereitungseffekt durch entsprechende Zusatzausrüstungen erzielbar ist.

Diese Aufgabe wird erfindungsgemäß durch die Merkmale des Patentanspruches 1 gelöst. Zweckmäßige Ausgestaltungen der Erfindung sind in den Unteransprüchen enthalten.

Die erfindungsgemäße Vorrichtung ist durch ein umlaufendes endloses Schneidband kostengünstig mit hoher Flächenleistung und hoher Schnittqualität herstellbar, wobei zur Führung des Schneidbandes am Rahmen Umlenkräder sowie eine untere Führungsschiene in gattungsgemäßer Bauart angeordnet sind und der im Eingriff befindliche Bereich des Schneidbandes zur Fixierung an der unteren Führungsschiene mit Führungsklammern zusammenwirkt. Diese Führungsklammern sind derart ausgebildet, daß sie das Schneidband federbelastet auf der unteren Führungsschiene andrücken und einen festen Anschlag gegenüber Kräften aus der Richtung der Fahrbewegung bilden. Damit ist auf der einen Seite ein sicheres Andrücken, auf der anderen Seite jedoch auch gewährleistet, daß zwischen Führungsschiene und Schneidband gelangendes Pflanzenmaterial nicht zu Verklemmungen führt. Dazu kann bevorzugtermaßen ein elastisch nach oben ausweichender Niederhalter oder aber auch ein Niederhalterbereich der Führungsklammern vorgesehen sein, wobei der Niederhalter z.B. aus Federstahl besteht.

Als Schneidwerkzeug wird ein umlaufendes endloses gezahntes Band verwendet, dass vorzugsweise aus dünn ausgewalztem hoch festem Stahl besteht. Dieses Schneidprinzip zeichnet sich vor allem dadurch aus, dass das Schneidband in Massenproduktion mit geringen Kosten hergestellt werden kann. Andererseits übernimmt das Schneidband neben der Funktion des Arbeitswerkzeugs gleichzeitig die eines Maschinenelements zur Übertragung der mechanischen Energie. Damit sind die grundlegenden Voraussetzungen für eine universell einsetzbare, kostengünstige Mähmaschine mit hoher Flächenleistung, geringem spezifischem Leistungsbedarf, hoher Schnittqualität und geringem Unfallpotenzial gegeben.
Um das Schneidband für den beabsichtigten Zweck nutzen zu können, wird es über mindestens zwei Umlenkräder ausreichenden Durchmessers mit horizontalen und in Fahrtrichtung weisenden Achsen während des Mähvorgangs bewegt. Der Achsabstand der Räder entspricht dabei der ungefähren nutzbaren Arbeitsbreite. Um die Antriebsenergie für das Mähen auf das Schneidband effektiv übertragen zu können, wird vorzugsweise mindestens eines der Umlenkräder angetrieben. In dieser Anordnung bewirkt der in der gewünschten Schnitthöhe geführte untere Schneidtrum das Abmähen der Pflanzen. Der obere in entgegengesetzte Richtung laufende Trum des Schneidbandes kann bei Bedarf und gegebenen Voraussetzungen zur Schaffung einer zusätzlichen Schnittebene für die weitere Einkürzung von langem Mähgut genutzt werden.
Mit der Wahl der Geschwindigkeit des umlaufenden Bandes ist neben dem Schnitt mit Gegenhaltern ein freier Schnitt ohne Gegenschneide möglich. Die dazu erforderliche Anpassung der Schnittgeschwindigkeit kann abgesichert werden durch das Ausnutzen der bei vielen Traktoren wahlweise zur Verfügung stehenden Zapfwellendrehzahlen von 540 und 1000 U/min oder durch die Änderung des Übersetzungsverhältnisses bei Keilriementrieben bzw. durch Schaltgetriebe. Um das bei geringer Schnittgeschwindigkeit erforderliche zusätzliche Abstützen der Halme zu erreichen, werden mit geringem Aufwand zu montierende Führungsschienen eingesetzt, die mit der erforderlichen hohen Anzahl von Gegenhaltern bestückt sind.

Zur sicheren Führung des Schneidbandes und zu seinem Schutz außerhalb des Bereichs der Umlenkräder werden im unteren und ggf. im oberen Trum Führungselemente, vorzugsweise als Führungsschienen mit Führungsklammern eingesetzt. Zur Abstützung der im Bereich der Umlenkung entgegengesetzt zur Fahrtrichtung auftretenden Kräfte sind die Umlenkräder mit einem zusätzlichen Anlaufbund versehen.
Um zu verhindern, dass sich während des Schnittvorgangs das Schneidband abhebt und sich Erd- und Pflanzenpartikel zwischen Führungsschiene und Schneidband anlagern, wird der Rahmen der Mähmaschine nach vorn geneigt. Durch diese Anstellung entsteht von oben auf das Schneidband ein zusätzlicher Anpressdruck sowie eine Abschirmungswirkung des Schneidbandes gegenüber Ablagerungen.
Das Schneidband besteht ähnlich der Ausführung bei industriell produzierten Bandsägen aus verschleißfestem hoch elastischen Stahl. Zum Erzielen einer maximalen Nutzungsdauer ist das Schneidband mit beidseitig wirkenden Zähnen versehen, die so ausgeführt sind, dass durch Umlegen des Schneidbandes jeweils zwei nutzbare Verschleißkanten an den Zähnen entstehen.
Um bei der Bandmähmaschine eine erforderliche Schnitthöhenverstellung zu ermöglichen, besteht die untere Führungsschiene aus zwei gegeneinander beweglichen Teilen. Das Oberteil ist zur Auflage des Schneidbandes fest mit dem Rahmen verbunden und das gleichzeitig als Gleitblech zur Bodenauflage ausgeführte Unterteil kann so geschwenkt werden, dass unterschiedliche Schnitthöhen entstehen.
Zur Vermeidung von Überlastungen infolge größerer Hindernisse in der Schneidebene ist das Mähwerk um eine horizontale Achse nach hinten schwenkbar gelagert und so am Basisfahrzeug aufgehängt, dass gleichzeitig mit dem Schwenkvorgang ein zusätzliches Anheben der Mähmaschine gekoppelt ist.

Zum Erzielen eines ggf. gewünschten Aufbereitungseffektes im gemähten Gut wird ein Rotor mit waagerechter Drehachse im Bereich zwischen den Umlenkrädern angeordnet, dessen Wirkung sowohl über die Drehzahl als auch durch die Form und die Anstellung zusätzlicher Schikanen auf der unteren Führungsschiene bestimmt wird.

Die Erfindung soll nachstehend an einem Ausführungsbeispiel näher erläutert werden. Die zugehörigen Figuren zeigen:
- Fig. 1:: Bandmähmaschinendarstellung entgegen Fahrtrichtung
- Fig. 2:: Bandmähmaschinendarstellung in Fahrtrichtung
- Fig. 3:: Bandmähmaschine in der Seitenansicht
- Fig. 4:: Führungsschiene in der Draufsicht
- Fig. 5:: Führungsschiene im Querschnitt

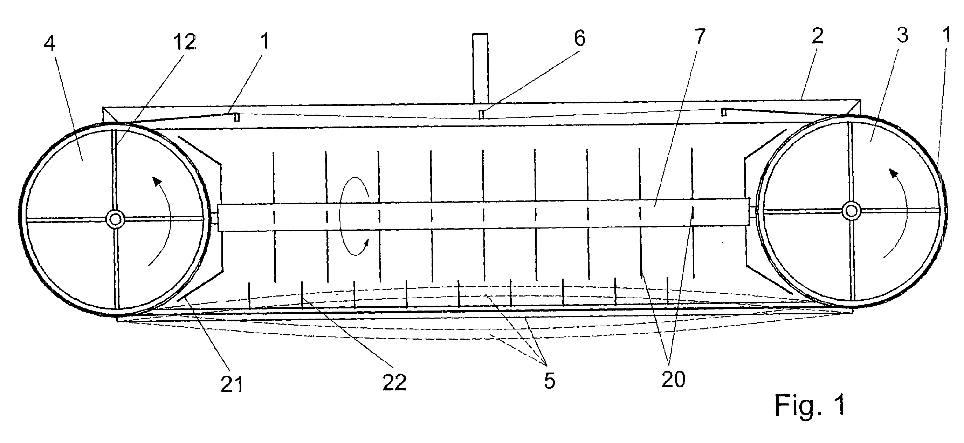

Gemäß Fig.1 besteht das Bandmähwerk im wesentlichen aus einem endlosen umlaufenden Schneidband 1 aus hoch festem elastischen Stahl. Erfindungsgemäß wird die Führung des Schneidbandes 1 durch einen Rahmen 2, die Umlenkräder 3 und 4, die untere Führungsschiene 5 und die obere Führung in Form eines Abstreif- und Führungselementes 6 erreicht.
Der Rahmen 2 stellt entsprechend Fig. 1; 2; 3 die Verbindung zur Basismaschine (Traktor, Selbstfahrer, Geräteträger) her; er trägt die Lagerstellen für die Umlenkräder 3; 4 und den Aufbereitungsrotor 7 und dient zur Befestigung der unteren Führungsschiene 5 sowie der oberen Führung in Form des oberen Abstreif- und Führungselementes 6 des Schneidbandes 1. Die Koppelpunkte am Rahmen 2 sind so beschaffen, dass ein direktes Koppeln der Bandmähmaschine an den unteren Lenkern von genormten Frontanbauvorrichtungen -vorrangig an Traktoren- möglich wird. Das Betreiben der Mähmaschine im Heckanbau ist über einen entsprechend ausgeführten Ausleger ebenso möglich.

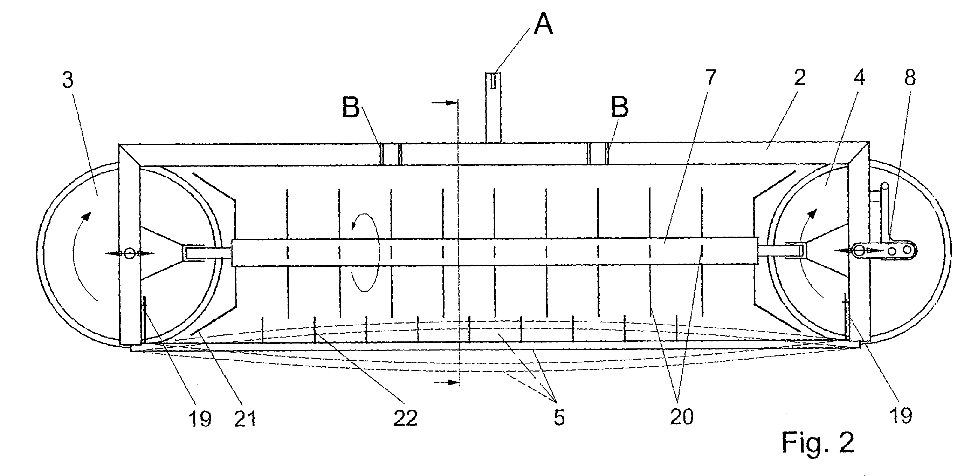

Zum Ein- und Ausbau des Schneidbandes 1 sowie zur Gewährleistung eines exakten Bandlaufs sind die Achsen der Umlenkräder 3; 4 hinsichtlich ihres Abstands zueinander und in ihrer Neigung zwecks Laufrichtungskorrektur verstellbar angeordnet. Für einen zeitsparenden Wechsel des Schneidbandes 1 dient eine Schnellspannrichtung 8 nach Fig.2, die nach erfolgtem Spannen des Bandes die für einen exakten Lauf ausgerichtete Achsenzuordnung wieder herstellt.

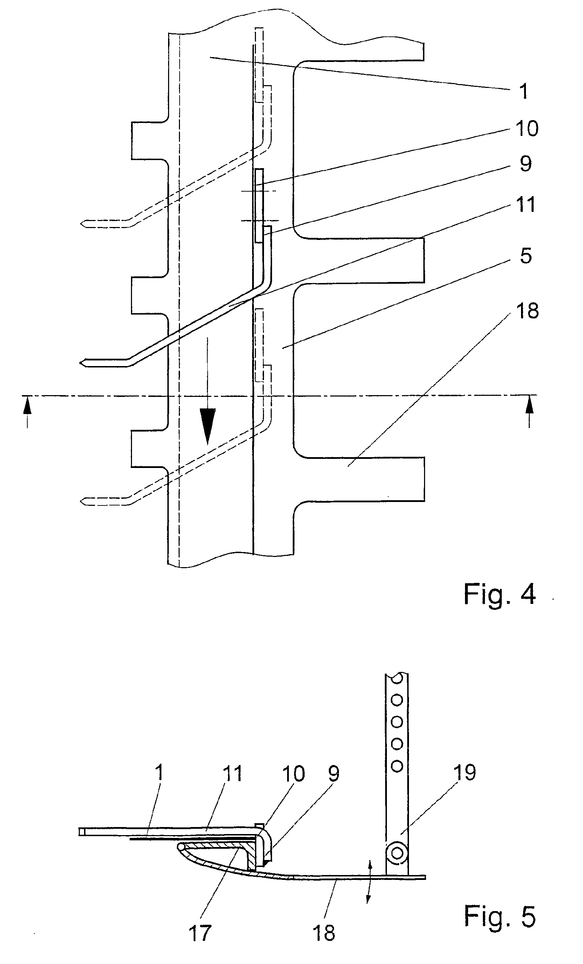

Der untere Trum des Schneidbandes 1 läuft auf einer Führungsschiene 5 und wird mittels Führungsklammern 9 entsprechend Fig. 4 u. 5 an einem Ausweichen nach hinten und nach oben gehindert. Die Führungsklammern 9 besitzen eine feste Anlaufkante 10 zum Abstützen der aus der Fahrbewegung resultierenden Schnittkraftkomponenten. Um zu verhindern, dass ein Abheben des Schneidbandes 1 von der Führungsschiene 5 erfolgt und zwischen Führungsschiene 5 und Schneidband 1 gelangtes Pflanzenmaterial zu Verklemmungen führt, ist ein elastisch nach oben ausweichender Niederhalter 11 aus Federstahl angebracht. Zum Erzielen einer zusätzlichen Reinigungswirkung auf der Schneidbandoberfläche sind die Niederhalter 11 vorzugsweise in einem Winkel von 30 bis 45 Grad angestellt. Wird das Material nach dem Prinzip des freien Schnitts gemäht, sind nur wenige Führungsklammern 9 auf der Führungsschiene 5 erforderlich. Soll der Schnittvorgang mit reduzierter Schnittgeschwindigkeit erfolgen, so sind die Führungsklammern 9 mit geringem Abstand untereinander in entsprechend höherer Anzahl auf der Führungsschiene als Gegenhalter anzuordnen (Fig. 4) . Werden die Niederhalter 11 in der Weise ausgelegt, dass sie über die vordere Schneidkante des Schneidbandes 1 hervorragen, so kann in diesem Fall zusätzlich ein Schutzeffekt für das Schneidband 1 gegenüber auf dem Boden liegenden Hindernissen erreicht werden.

Zur besseren Anpassung der Führungsschiene 5 an die jeweils vorhandenen Bodenkonturen wird diese vozugsweise in senkrechter Richtung biegeelastisch ausgeführt (Fig. 2). Damit biegt sie sich, wenn sie ausgehoben wird, infolge der Eigenlast in der Mitte nach unten durch. Läuft sie in der Mitte auf Bodenerhöhungen auf, erfolgt andererseits eine begrenzte Durchbiegung nach oben.

Bei der Ausführung des Schneidbands 1 gibt es ein breites Optimierungspotenzial zum Erzielen optimaler Schnitteigenschaften und Standzeiten. So können Werkstoffeigenschaften, Banddicke, Bandbreite und Zahnformen den charakteristischen Einsatzbedingungen angepasst werden. Erfindungsgemäß sind die Schneidzähne so ausgeführt, dass das Schneidband 1 in beiden Bewegungsrichtungen eingesetzt werden kann. Dieses ist durch entsprechende Formgebung der Schneidzähne sowie durch Umlegen des Schneidbandes 1 erreichbar.

Insbesondere beim Mähen von überständigen und faserigen Pflanzen können sich Pflanzenpartikel um die Kanten der Schneidzähne des Bandes legen und somit die Schnittwirkung negativ beeinträchtigen. Um einen dann notwendigen Reinigungseffekt zu erzielen, wird das Schneidband 1 im Bereich des oberen Trums zwischen Abstreif- und Führungselementen 6 hindurchgeführt. Zum Erreichen des gewünschten Abstreifeffektes werden diese schräg zur Bewegungsrichtung des Schneidbandes 1 angestellt und so angeordnet, dass nur jeweils eine einseitige Bandanlage erfolgt. Die notwendige Auflagekraft wird dabei durch eine geringfügige Auslenkung des Schneidbandes 1 sowie infolge der funktionsbedingt vorhandenen Bandspannung erzeugt.

Um zu verhindern, dass im Bereich der Umlenkräder 3;4 stehendes oder bereits abgemähtes Gut zu Stauerscheinungen vor den Umlenkrädern führt, werden diese mit zusätzlichen radial angeordneten Räumelementen 12 versehen, die entsprechend ihrer Drehbewegung das Schnittgut seitlich beräumen.

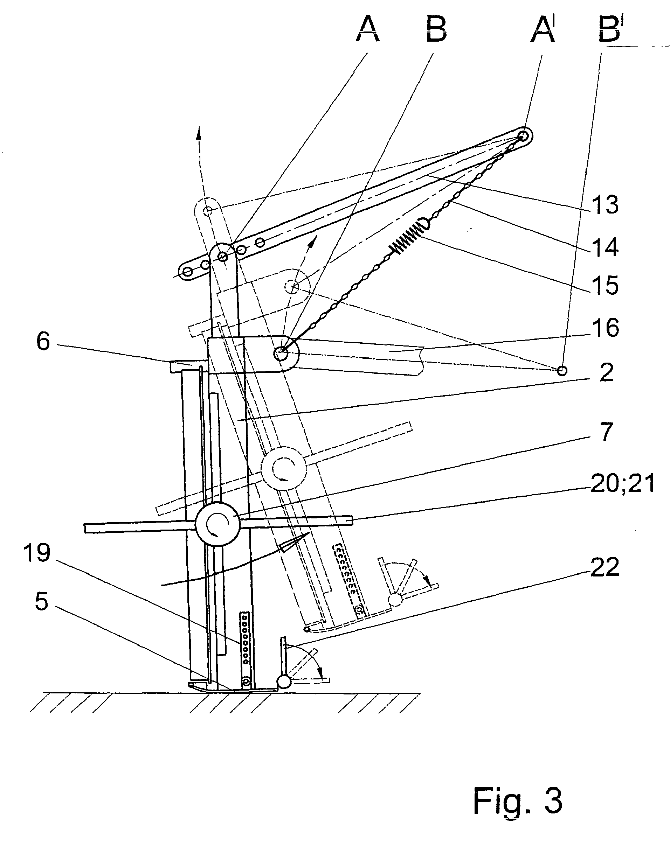

Auf landwirtschaftlichen Flächen muss mit dem Auftreten von größeren Hindernissen gerechnet werden. Ohne einen Überlastschutz würde ein Kontakt zu ernsthaften Schäden an der Bandmähmaschine führen. Erfindungsgemäß kann die Bandmähmaschine durch eine spezielle Überlastsicherung wirksam geschützt werden. Dazu wird entsprechend Fig.3 der obere Anlenkpunkt A der Mähmaschine vorzugsweise über ein in der Länge verstellbares Koppelglied (Lochschiene; Spannschloss) 13 mit dem traktorseitigen Anlenkpunkt A' verbunden. Zwischen den Anschlagpunkten A' und B werden vorzugsweise eine Gliederkette 14 und eine Zugfeder 15 eingehängt, die bei in Arbeitsstellung abgesenkter Mähmaschine eine einstellbare Reduzierung der Auflagekraft der Führungsschiene auf dem Boden bewirken. Befindet sich ein vom Maschinenbediener nicht erkanntes Hindernis im Bereich der unteren Führungsschiene 5, entsteht durch das Anfahren ein Moment um die unteren Anlenkpunkte B, das eine zusätzliche Kraftwirkung im Koppelglied 13. Infolge dieser Kraftwirkung werden durch die Zugwirkung des Koppelgliedes 13 die unteren Lenker des Traktors 16 über den Rahmen der Mähmaschine 2 auf einer Kreisbahn um den Punkt B' nach oben ausgehoben. Auf Grund der kinematischen Verhältnisse weicht damit die untere Führungsschiene 5 nach hinten aus und hebt sich als zusätzlicher Sicherungseffekt gleichzeitig nach oben aus dem Gefahrenbereich heraus. Mit dieser Lösung wird gleichzeitig eine von der wirkenden Horizontalkraft abhängige selbsttätige Regelung der Auflagekraft der Führungsschiene 5 auf dem Erdboden erreicht. Im Falle des Ansteigens der durch die Fahrbewegung und die Auflagekraft verursachten Horizontalkraft auf die Führungsschiene 5 entsteht im Koppelglied eine Zugkraft, die eine Entlastung der Führungsschiene 5 und somit der resultierenden Horizontalkraft bewirkt.

Zur einfachen Einstellung der Schnitthöhe besteht die untere Führungsschiene 5 aus einer Schneidbandauflage 17 und einer Gleitschiene 18 nach Fig. 5. Die Schneidbandauflage 17 ist mit dem Rahmen 2 verbunden und nimmt somit immer die gleiche Lage zum Schneidband 1 ein. Die Gleitkufe 18 ist mit der Schneidbandauflage 17 gelenkig verbunden und wird gegenüber dem Rahmen 2 mit einer Stütze 19 gelenkig verbunden. Diese Stütze 19 ist in ihrer Länge verstellbar und somit die Schnitthöhe.

Zum Erzielen eines ggf. erwünschten Aufbereitungseffekts kann ein mit Zinken besetzter Förder- und Aufbereitungsrotor 7 zwischen den Umlenkrädern 3;4 angeordnet werden. Dabei steht die Rotorachse annähernd über der unteren Führungsschiene 5 und die äußeren Spitzen der Zinken 20 reichen maximal bis dicht an die nach oben durchgebogene Führungsschiene 5 heran. Im Bereich des inneren Teils der Umlenkräder 3, 4 sind die Zinken 21 so abgewinkelt, dass ihre Spitzen bis in den Ein- bzw. Auslaufbereich des Schneidbandes 1 hineinreichen, ohne dabei die Umlenkräder 3;4 zu berühren. Durch die Wahl der Drehzahl des Rotors 7 sowie durch die wahlweise Anordnung zusätzlicher in ihrer Wirkung einstellbarer Schikanen 22 ist es möglich, den Aufbereitungsgrad den agrotechnischen Anforderungen entsprechend anzupassen. Die untere Drehzahl des Rotors 7 ist so bemessen, dass zur Vermeidung von Verstopfungen der erforderliche Fördereffekt noch gewährleistet wird.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

### Bezugszeichenliste

- 1: Schneidband
- 2: Rahmen
- 3: Umlenkrad
- 4: Umlenkrad
- 5: untere Führungsschiene
- 6: Abstreif- und Führungselement
- 7: Aufbereitungsrotor
- 8: Schnellspanneinrichtung
- 9: Führungsklammer
- 10: Anlaufkante
- 11: Niederhalter
- 12: Räumelement
- 13: Koppelglied
- 14: Gliederkette
- 15: Zugfeder
- 16: unterer Lenker
- 17: Schneidbandauflage
- 18: Gleitkufe
- 19: Stütze
- 20: Zinken
- 21: abgewinkelter Zinken
- 22: Schikane
- A; A': obere Anlenkpunkte
- B; B': untere Anlenkpunkte

## Patentansprüche

1. Vorrichtung zum Mähen von Pflanzen durch ein umlaufend endloses Schneidband mit Zähnen, wobei zur Führung des Schneidbandes (1) ein Rahmen (2), Umlaufräder (3, 4) sowie eine untere Führungsschiene (5) angeordnet sind und der im Eingriff befindliche Bereich des Schneidbandes (1) zur Fixierung an der unten Führungsschiene (5) mit Führungsklammern (9) zusammenwirkt, **dadurch gekennzeichnet, daß** die Führungsklammern (9) derart ausgebildet sind, daß sie das Schneidband (1) federbelastet auf der unteren Führungsschiene (5) andrücken und einen festen Anschlag gegenüber Kräften aus der Richtung der Fahrbewegung bilden.

2. Vorrichtung nach Anspruch 1, **dadurch gekennzeichnet, daß** die Führungsklammern (9) eine Anlaufkante (10) aufweisen und mit Niederhaltern (11) zusammenwirken.

3. Vorrichtung nach Anspruch 2, **dadurch gekennzeichnet, daß** die Niederhalter (11) derart angeordnet sind, daß sie für andere Betriebsweisen als den freien Schnitt über die vordere Schnittkante des Schneidbandes (1) hervorragen.

4. Vorrichtung nach Anspruch 1, **dadurch gekennzeichnet, daß** die Umlenkräder (3,4) einen Anlaufbund aufweisen.

5. Vorrichtung nach Anspruch 1, **dadurch gekennzeichnet, daß** das Schneidband (1) einen Schnittvorgang in einer unteren und/oder oberen Schnittebene realisiert.

6. Vorrichtung nach Anspruch 1, **dadurch gekennzeichnet, daß** die untere Führungsschiene (5) in vertikaler Richtung biegeelastisch ausgebildet ist.

7. Vorrichtung nach Anspruch 1, **dadurch gekennzeichnet, daß** der Rahmen (2) der Mähmaschine während des Mähens nach vorn geneigt ist.

8. Vorrichtung nach einem der Ansprüche 1 bis 7, **dadurch gekennzeichnet, daß** das Schneidband (1) Schneidzähne aufweist, die in beide Bewegungsrichtungen wirksam sind und die durch auftretenden Verschleiß an den jeweils aktiven Schnittkanten die passiven Schnittkanten wieder in einen schneidfähigen Zustand bringen.

9. Vorrichtung nach Anspruch 1, **dadurch gekennzeichnet, daß** innerhalb des Rahmens (2) zwischen den Umlenkrädern (3, 4) ein Aufbereitungsrotor (7) anordenbar ist.

10. Vorrichtung nach Anspruch 9, **dadurch gekennzeichnet, daß** der Förder- und Aufbereitungsrotor (7) Zinken (20, 21) aufweist.

11. Vorrichtung nach einem der Ansprüche 1 bis 10, **dadurch gekennzeichnet, daß** an der unteren Führungsschiene (5) Schikanen (22) angeordnet sind.

12. Vorrichtung nach Anspruch 11, **dadurch gekennzeichnet, daß** die Schikanen (22) in ihrem Winkel verstellbar ausgebildet sind.

13. Vorrichtung nach Anspruch 8, **dadurch gekennzeichnet, daß** die Schneidzähne zwei nutzbare Schneidkanten aufweisen.

14. Vorrichtung nach einem der Ansprüche 1 bis 13, **dadurch gekennzeichnet, daß** ein Koppelglied (13) oberhalb eines Anlenkpunktes (B) von unteren Lenkern eines Dreipunktanbaus für Traktoren am Rahmen angebracht und mit einem traktorseitigen Anlenkpunkt (A') verbunden ist, weicher sich seinerseits oberhalb des traktorseitigen Anlenkpunktes (B') befindet.

15. Vorrichtung nach Anspruch 14, **dadurch gekennzeichnet, daß** zwischen Anlenkpunkt (A') und (B) ein Zugmittel als Gliederkette (14) in Kombination mit einer Zugfeder (15) vorgesehen ist.

16. Vorrichtung nach Anspruch 14, **dadurch gekennzeichnet, daß** als traktorseitiger Anschlag des Zugmittels der vorhandene obere Anschlagpunkt (A') des standardisierten Dreipunkt-Anbaus genutzt wird.

## Claims

1. Device for mowing plants by means by means of a toothed cutting strip which is endless in circulation, a frame (2), return pulleys (3, 4) and a bottom guide rail (5) being arranged to guide the cutting strip (1) and, for location against the bottom guide rail (5), that region of the cutting strip (1) which is in engagement co-operating with guiding braces (9), **characterised in that** the guiding braces (9) are so formed that they press the cutting strip (1) against the bottom guide rail (5) under spring loading and form a solid abutment against forces coming from the direction of forward movement.

2. Device according to claim 1, **characterised in that** the guiding braces (9) have a contacting edge (10) and co-operate with hold-downs (11).

3. Device according to claim 2, **characterised in that** the hold-downs (11) are so arranged that they project beyond the front cutting edge of the cutting strip (1) for modes of operation other than free cutting.

4. Device according to claim 1, **characterised in that** the return pulleys (3, 4) have a retaining collar,

5. Device according to claim 1, **characterised in that** the cutting strip performs a cutting operation in a lower and/or an upper plane of cut.

6. Device according to claim 1, **characterised in that** the bottom guide rail (5) is formed to be elastic in bending in the vertical direction.

7. Device according to claim 1, **characterised in that** the frame (2) of the mower is inclined forwards during mowing.

8. Device according to one of claims 1 to 7, **characterised in that** the cutting strip (1) has cutting teeth which act in both directions of movement and which, by means of wear which occurs at whichever cutting edges are active at the time, restore the passive cutting edges to a state in which they are capable of cutting.

9. Device according to claim 1, **characterised in that** a conditioning rotor (7) is arranged inside the frame (2), between the return pulleys (3, 4).

10. Device according to claim 9, **characterised in that** the feeding and conditioning rotor (7) has tines (20, 21).

11. Device according to one of claims 1 to 10, **characterised in that** chicanes (22) are arranged on the bottom guide rail (5)

12. Device according to claim 11, **characterised in that** the chicanes (22) are so designed that their angle can be adjusted.

13. Device according to claim 8, **characterised in that** the cutting teeth have two usable cutting edges.

14. Device according to one of claims 1 to 13, **characterised in that** a coupling member (13) is mounted on the frame above a hinge point (B) for bottom bars of a three-point linkage for tractors and is connected to a hinge point (A') on the tractor side which in turn is situated above the hinge point (B') on the tractor side.

15. Device according to claim 14, **characterised in that** a tractive means is provided between the hinge points (A') and (B) in the form of an open-link chain (14) in combination with a tension spring (15).

16. Device according to claim 14, **characterised in that** the existing upper abutment point (A') of the standardised three-point linkage is used as the abutment on the tractor side for the tractive means.

## Revendications

1. Dispositif pour couper des végétaux à l'aide d'une bande de coupe (1) sans fin, circulant, portant des dents, et guidée par un châssis (2), des roues de renvoi (3, 4) ainsi qu'un rail de guidage inférieur (5) et la zone active de la bande de coupe (1), coopère avec des pinces de guidage (9) du rail de guidage inférieur (5) pour être tenue,
**caractérisé en ce que**
les pinces de guidage (9) sont réalisées pour pousser élastiquement la bande de coupe (1), contre le rail de guidage inférieur (5) et former un appui fixe pour les efforts dans la direction du mouvement de déplacement.

2. Dispositif selon la revendication 1,
**caractérisé en ce que**
les pinces de guidage (9) comportent une arête d'attaque (10) et coopèrent avec les organes de retenue (11).

3. Dispositif selon la revendication 2,
**caractérisé en ce que**
les organes de retenue (11) viennent en saillie au-delà de l'arête de coupe avant de la bande de coupe (1) pour d'autres modes de fonctionnement que la coupe libre.

4. Dispositif selon la revendication 1,
**caractérisé en ce que**
les roues de renvoi (3, 4) comportent une rampe de guidage.

5. Dispositif selon la revendication 1,
**caractérisé en ce que**
la bande de coupe (1) réalise une coupe dans un plan de coupe inférieur et/ou supérieur.

6. Dispositif selon la revendication 1,
**caractérisé en ce que**
le rail de guidage inférieur (5) est flexible dans la direction verticale.

7. Dispositif selon la revendication 1,
**caractérisé en ce que**
le châssis (2) de la moissonneuse est incliné vers l'avant pendant la coupe.

8. Dispositif selon l'une des revendications 1 à 7,
**caractérisé en ce que**
la bande de coupe (1) comporte des dents qui travaillent dans les deux sens de déplacement et réafutent les arêtes de coupe passives par l'usure au niveau des arêtes de coupe actives.

9. Dispositif selon la revendication 1,
**caractérisé en ce qu'**
un rotor de préparation (7) est installé dans le châssis (2) entre les roues de renvoi (3, 4).

10. Dispositif selon la revendication 9,
**caractérisé en ce que**
le rotor de transfert et de préparation (7) comporte des dents (20, 21).

11. Dispositif selon l'une des revendications 1 à 10,
**caractérisé en ce que**
des chicanes (22) sont prévues sur le rail de guidage inférieur (5).

12. Dispositif selon la revendication 11,
**caractérisé en ce que**
l'angle des chicanes (20) est réglable.

13. Dispositif selon la revendication 8,
**caractérisé en ce que**
les dents de coupe comportent deux arêtes de coupe utilisables.

14. Dispositif selon l'une des revendications 1 à 13,
**caractérisé par**
un organe de couplage (13) au-dessus d'un point d'articulation (B) des bras inférieurs du dispositif d'attelage en trois points pour les tracteurs prévu sur le châssis, est relié à un point d'articulation (A') du tracteur qui se trouve lui-même au-dessus du point d'articulation (B') du tracteur.

15. Dispositif selon la revendication 14,
**caractérisé par**
un moyen de traction en forme de chaîne à maillons (14) combiné à un ressort de traction (15) entre les points d'articulation (A') et (B).

16. Dispositif selon la revendication 14,
**caractérisé en ce que**
le point de fixation supérieur (A') existant de l'attelage en trois points normal est utilisé comme point de fixation pour le moyen de traction sur le tracteur.
